# EUROPEAN PATENT APPLICATION

(11) **EP 4 628 251 A1**
(43) Date of publication of application: **08.10.2025**
(21) Application number: 23897722.7
(22) Date of filing: 27.11.2023
(51) Int. Cl.: B23Q 11/10, B23Q 11/00, C02F 1/40

(54) **CHAIN BUCKET SKIMMER**

(30) Priority: 28.11.2022 JP 2022189410
(71) Applicant: Bunri Incorporation, Tokyo 140-0014 (JP)
(72) Inventor: TASHIRO, Makoto, Tokyo 140-0014 (JP)
(74) Representative: AWA Sweden AB
(86) International application number: PCT/JP2023/042349
(87) International publication number: WO 2024/117074

(57) **Abstract**

A chain bucket skimmer (10) includes a chain bucket unit (22) including a chain (20) and a bucket (21), a first flow control member (81), a second flow control member (82), a first fan (91) and a second fan (92). Liquid is moved by the first fan (91) and the second fan (92) toward the chain bucket unit (22). The first flow control member (81) is located on a side facing a bucket ascending portion (22a) of the chain bucket unit (22). The second flow control member (82) is located on a side facing a bucket descending portion (22b). A first inflow portion (85) is formed inside the first flow control member (81). A second inflow portion (86) is formed inside the second flow control member (82).

## Description

### Technical Field

The present invention relates to a chain bucket skimmer for removing a floating matter such as oil floating at a liquid surface of a liquid such as coolant.

### Background Art

Coolant is used to cool machine tools. Used coolant is returned from the machine tool to a tank and is to be supplied to the machine tool again by a pump. Therefore, it is inevitable that oil stuck to a surface of a workpiece, a hydraulic oil of the machine tool, a lubricating oil, and the like enter the coolant. The oil that has entered the coolant floats on the liquid surface of the coolant. In some cases, a fine object to be removed such as sludge floats near the liquid surface.

Devices referred to as oil skimmers have been used conventionally to remove a floating matter such as oil and sludge floating on the liquid surface of a liquid such as coolant. A typical example of the oil skimmer comprises an endless belt for catching oil floating in the vicinity of a liquid surface, a motor moving the belt between the inside and the outside of the liquid, a scraper for scraping oil adhered to the surface of the belt, and the like.

Patent Literature 1 discloses an example of the oil skimmer. The oil skimmer of Patent Literature 1 comprises a fan. The fan rotates to produce a flow in liquid in a tank to make oil floating on the liquid surface adhered to a belt. Compared to a conventional oil skimmer not using a fan, the oil skimmer using the fan increases efficiency of recovering the oil.

Oil skimmers that use a chain bucket instead of the belt for catching oil are also publicly known. The oil skimmer of this type is referred to as a chain bucket skimmer and is widely used in the industry. Patent Literature 2 discloses an example of the chain bucket skimmer.

The chain bucket skimmer disclosed in Patent Literature 2 includes an endless chain moving in a vertical direction by a motor and a bucket attached to the chain. The bucket is moved in the upward direction from liquid to store oil floating on the liquid surface into the bucket. After reaching an upward end, the bucket descends toward a downward end. At the time of descending, the bucket is reversed such that its opening faces downward to drain liquid containing oil in the bucket onto a chute.

Compared to a conventional oil skimmer using a belt, the chain bucket skimmer disclosed in Patent Literature 2 has higher efficiency of recovering the oil. In addition, the chain bucket skimmer does not cause problems such as wear and breakage of the belt. Therefore, the chain bucket skimmer has an advantage that labors for maintenance such as changing belts can be reduced.

### Citation List

### Patent Literatures

Patent Literature 1: KR 20-0330860 Y
Patent Literature 2: JP 2005-14127 A

### Summary of Invention

### Technical Problem

A conventional oil skimmer using a belt has a low efficiency of recovering oil. Thus, a problem that oil cannot be completely recovered occurs in a machine tool that uses a large amount of liquid (for example, coolant). Even an oil skimmer comprising a fan such as the oil skimmer in Patent Literature 1 cannot always move an oil floating on the liquid surface toward a belt efficiently.

The oil skimmer in Patent Literature 2 has higher efficiency of recovering the oil compared to common oil skimmers and does not cause problems such as wear and breakage of the belt. However, an efficiency of recovering the oil may be insufficient in machine tools using large amount of coolant. Therefore, it is desirable to utilize the advantages of the chain bucket skimmers together with further enhancing efficiency of recovering the oil.

The present invention aims to provide a chain bucket skimmer which can efficiently remove oil floating in a liquid and target to be removed floating near the liquid surface.

### Solution to Problem

An embodiment is a chain bucket skimmer for removing a floating matter floating in a liquid and includes a chain bucket unit including an endless chain and a bucket. The chain moves between a downward end located below a liquid surface of the liquid and an upward end located above the liquid surface. The bucket is attached to the chain and includes an opening into which the liquid flows and a liquid storage portion for storing the liquid.

When the bucket moves from the downward end to the upward end, the opening faces upward. When the bucket moves to the downward end after passing through the upward end, the bucket is inverted such that the opening faces downward. The chain bucket unit includes a bucket ascending portion moving from the downward end to the upward end and a bucket descending portion moving from the upward end to the downward end.

The chain bucket skimmer of the present embodiment includes a drive unit for moving the chain bucket unit, a first fan, a second fan, a first flow control member, a second flow control member, a first inflow portion, and a second inflow portion. Each of the first fan and the second fan is located at a position in contact with the liquid surface.

The first fan rotates about a rotation shaft to move the liquid toward the chain bucket unit in a first direction. The second fan is arranged on a side opposite to the first fan with the chain bucket unit interposed therebetween. The second fan rotates about the rotation shaft to move the liquid toward the chain bucket unit in a second direction.

The first flow control member faces the bucket ascending portion in a horizontal direction, extends from the liquid surface to the liquid, is arranged over the first fan and the second fan at a height corresponding to heights of the first fan and the second fan, and moves a part of the liquid and a floating matter moved by rotation of the first fan and the second fan, toward the bucket ascending portion.

The second flow control member faces the bucket descending portion in the horizontal direction, extends from the liquid surface to the liquid, is arranged over the first fan and the second fan at a height corresponding to the heights of the first fan and the second fan, and moves a part of the liquid and the floating matter moved by rotation of the first fan and the second fan, toward the bucket descending portion.

The first inflow portion is formed between the first fan and the second fan inside the first flow control member. The bucket ascending portion is arranged in the first inflow portion. The liquid and the floating matter that have flowed into the inside of the first flow control member enter the first inflow portion. The second inflow portion is formed between the first fan and the second fan inside the second flow control member. The bucket descending portion is arranged in the second inflow portion. The liquid and the floating matter that have flowed into the inside of the second flow control member enter the second inflow portion.

In the chain bucket skimmer of the present embodiment, twist direction of a blade of the first fan may be opposite to that of a blade of the second fan. The first fan and the second fan may rotate about the rotation shaft in the same direction. A fan drive sprocket may be provided on the rotation shaft. The fan drive sprocket may engage with the chain. When the chain moves, the first fan and the second fan may rotate in the same direction.

A first opening facing the first fan may be formed between the first flow control member and the second flow control member. A second opening facing the second fan may be formed between the first flow control member and the second flow control member. The first opening is in communication with the first inflow portion and the second inflow portion. A second opening also is in communication with the first inflow portion and the second inflow portion.

The bucket is preferably formed of a resin single body and preferably includes a first bottom plate having a first upper end, a second bottom plate having a second upper end higher than the first upper end, a first side plate, a second side plate, an underflow control plate, and an underflow circulating portion. The second bottom plate forms the liquid storage portion together with the first bottom plate. The underflow control plate is formed over the entire bucket in a width direction and includes a lower end at a position lower than the first upper end. The underflow circulating portion is formed between the underflow control plate and the first bottom plate.

The chain bucket unit may include a bucket attachment pin for rotatably attaching the bucket to the chain in the vertical direction and a stopper member for supporting the bucket from below such that the opening faces upward in a state where the bucket is located at the bucket ascending portion.

### Advantageous Effects of Invention

A chain bucket skimmer of the present embodiment can move a liquid containing a floating matter such as oil to a bucket ascending portion of a chain bucket unit by a first fan and a second fan. Thus, the floating matter such as oil moving in the vicinity of the bucket ascending portion can be efficiently stored in the bucket moving upward.

### Brief Description of Drawings

FIG. 1 is a perspective view of a chain bucket skimmer of an embodiment.
FIG. 2 is a cross-sectional view of the chain bucket skimmer taken along F2-F2 line shown in FIG. 1.
FIG. 3 is a cross-sectional view of the chain bucket skimmer taken along F3-F3 line shown in FIG. 2.
FIG. 4 is a cross-sectional view of the chain bucket skimmer taken along F4-F4 line shown in FIG. 3.
FIG. 5 is a rear view of a bucket of the chain bucket skimmer shown in FIG. 1.
FIG. 6 is a cross-sectional view of the bucket taken along F6-F6 line shown in FIG. 5.
FIG. 7 is a cross-sectional view showing a state where the bucket shown in FIG. 6, which has passed through an upward end, is inverted.
FIG. 8 is a graph showing recovered amount of oil of the chain bucket skimmer of an embodiment and recovered amount of oil of a conventional chain bucket skimmer.

### Mode for Carrying Out the Invention

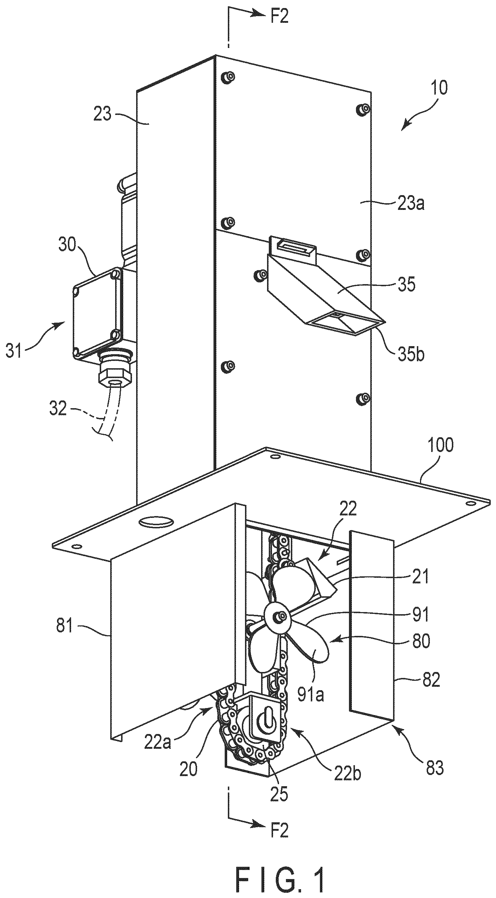

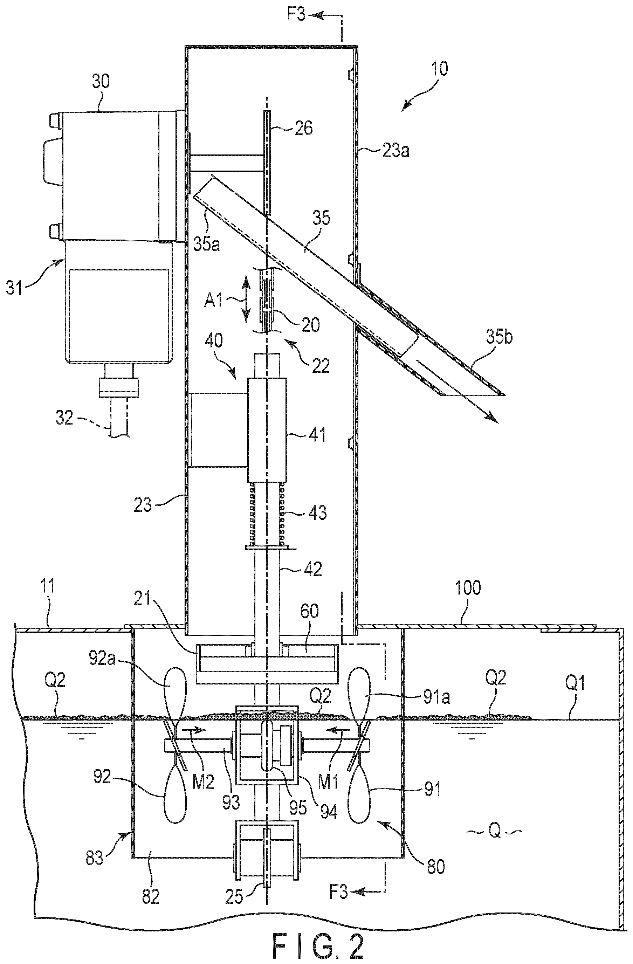

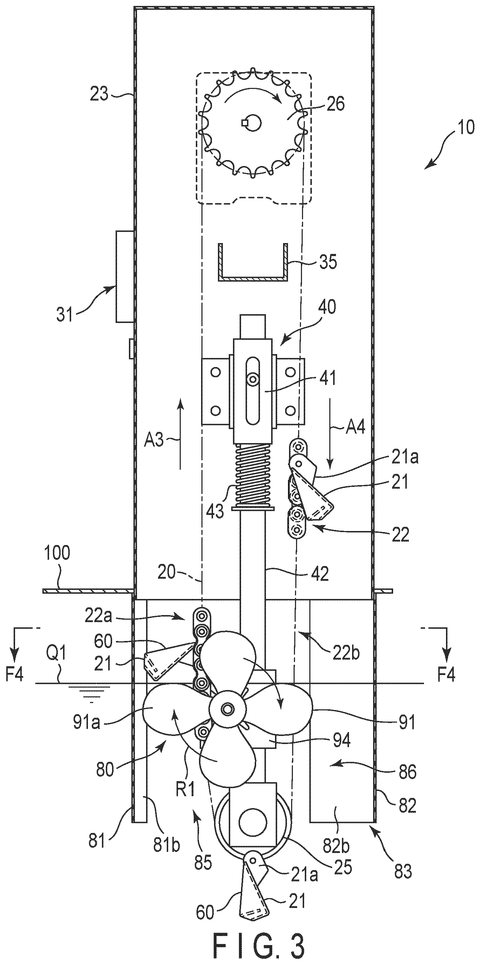

An embodiment of a chain bucket skimmer will now be described with reference to FIG. 1 to FIG. 8. FIG. 1 is a perspective view of a chain bucket skimmer 10. FIG. 2 is a cross-sectional view of the chain bucket skimmer 10 taken along F2-F2 line shown in FIG. 1. FIG. 3 is a cross-sectional view of the chain bucket skimmer 10 taken along F3-F3 line shown in FIG. 2.

The chain bucket skimmer 10 is provided in a tank 11 (partially shown in FIG. 2) storing liquid Q such as water-soluble coolant. A floating matter Q2 such as oil floats on a liquid surface Q1 of the liquid Q accommodated in the tank 11. The chain bucket skimmer 10 functions as a liquid purifier for removing the floating matter Q2 such as oil. The liquid Q stored in the tank 11 is provided to a liquid use portion of the machine tool and the like by a pump. The liquid Q used in the liquid use portion returns to the tank 11.

The chain bucket skimmer 10 includes an endless chain 20 moving in the vertical direction and a plurality of buckets 21 attached to the chain 20. A chain bucket unit 22, which moves in the vertical direction, comprises the chain 20 and the bucket 21. The chain bucket unit 22 is provided inside a casing 23. The chain 20 is wound between a rotor 25 located below the liquid surface Q1 and the drive sprocket 26 located above the liquid surface Q1.

The drive sprocket 26 rotates in a certain direction by a motor 30 having a speed reducer. The drive sprocket 26 and the motor 30 constitute a drive unit 31 for moving the chain bucket unit 22 in the vertical direction. The motor 30 is supplied with electric power by a power cable 32 (partially shown in FIG. 1 and FIG. 2).

A detachable cover member 23a is provided on a part of the side surface of the casing 23. A chute 35 is arranged so as to penetrate the cover member 23a. The chute 35 is inclined so as to decrease in height from a first end portion 35a close to the drive sprocket 26 toward a second end portion 35b arranged outside the cover member 23a. An oil-water separator is arranged below the second end portion 35b.

The chain bucket unit 22 includes a bucket ascending portion 22a along which the bucket 21 moves upward and a bucket descending portion 22b along which the bucket 21 moves downward. The bucket ascending portion 22a moves from the rotor 25 located at the downward end toward the drive sprocket 26 located at the upward end. The bucket descending portion 22b moves from the drive sprocket 26 toward the rotor 25.

A tension mechanism 40 automatically adjusting the tension of the chain 20 is provided between the rotor 25 and the drive sprocket 26. The tension mechanism 40 includes a guide member 41 fixed to the casing 23, a rod 42, a spring 43, and the like. The rod 42 is supported by the guide member 41 so as to be movable in the vertical direction. The rotor 25 is arranged at the lower end of the rod 42. The rod 42 is urged downward by the spring 43 to apply appropriate tension to the chain 20.

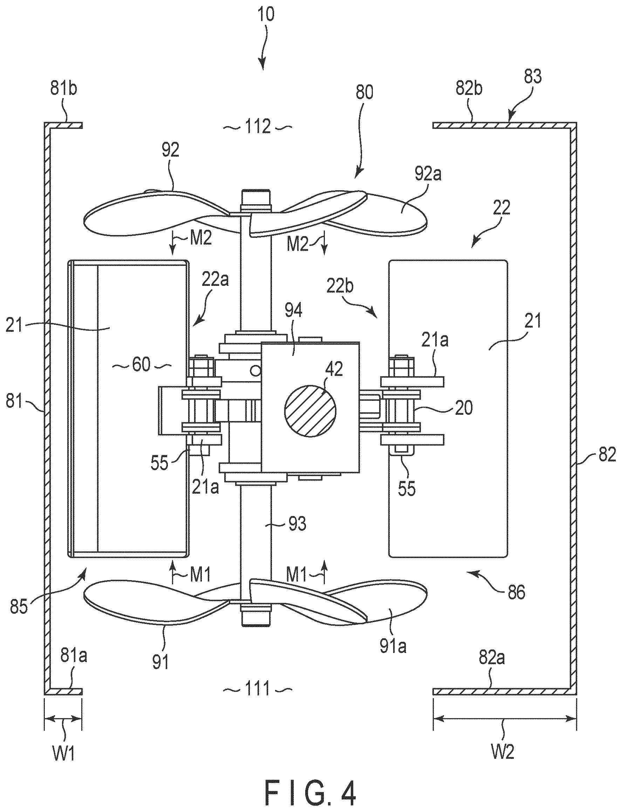

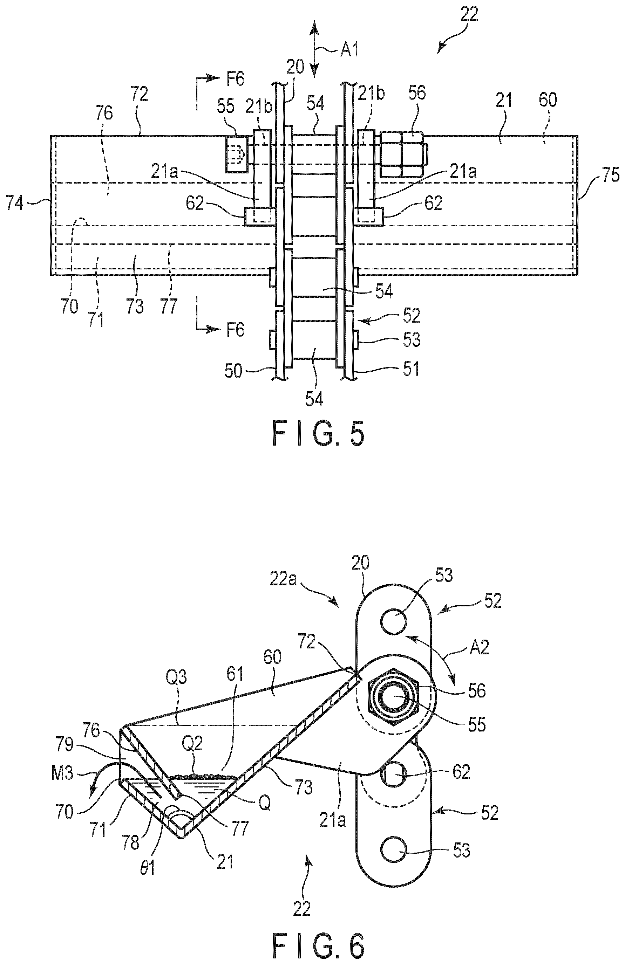

FIG. 4 is a cross-sectional view of the chain bucket skimmer 10 taken along F4-F4 line in FIG. 3. FIG. 5 is a rear view showing a part of the chain 20 and the bucket 21. FIG. 6 is a cross-sectional view of the bucket 21 taken along F6-F6 line in FIG. 5. A double-headed arrow A1 shown in FIG. 2 and FIG. 5 indicate a longitudinal direction of the chain 20.

As shown in FIG. 5 and FIG. 6, the chain 20 includes a link pair 52 constituted by a pair of link plates 50 and 51, a pin 53, and a roller 54 provided on the pin 53. The two plates of the link pair 52 adjacent in the longitudinal direction of the chain 20 are rotatably connected to each other by the pin 53.

A bolt-shaped bucket attachment pin 55 for attaching the bucket 21 is provided on a part of the chain 20 in the longitudinal direction. A bracket portion 21a is formed on the back surface of the bucket 21. The bucket attachment pin 55 passes through a hole 21b in the bracket 21a. A double nut 56 is screwed against the pin 55. The bucket 21 can rotate about the bucket attachment pin 55 in the direction indicated by a double-headed arrow A2 in FIG. 6.

FIG. 6 shows a state in which the bucket 21 moves upward, in other words, a state in which the bucket 21 is located at the bucket ascending portion 22a. The bucket 21 includes an opening 60 through which the liquid Q can flow in and a liquid storage portion 61 for storing the liquid Q. The opening 60 faces upward when the bucket 21 moves upward. That is, the bucket 21 becomes an upward state. In this state, the bucket 21 is supported from below by a stopper member 62.

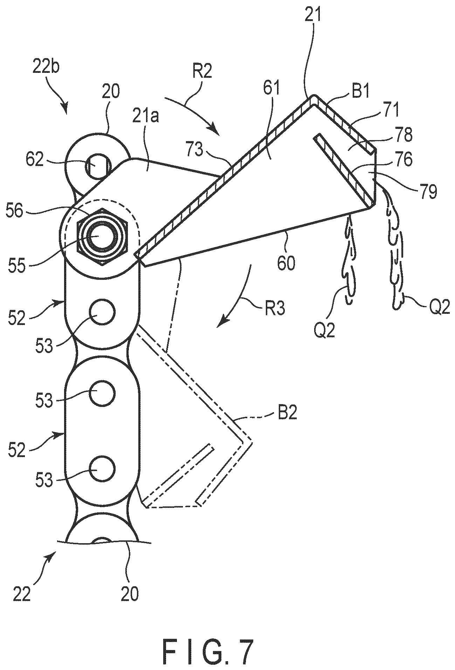

When the bucket 21 passes through the drive sprocket 26 at the upward end and moves to the bucket descending portion 22b, the bucket 21 is inverted about the bucket attachment pin 55 from a position indicated by a solid line B1 to a position indicated by a two-dot chain line B2 in FIG. 7. Thus, the opening 60 faces downward. In other words, the bucket 21 becomes a downward state. In this manner, the bucket 21 is rotatable in the vertical direction, becomes the upward state when moving upward, and becomes the downward state when moving downward.

The bucket 21 is formed of a resin single body. As shown in FIG. 5 and FIG. 6, the bucket 21 includes a first bottom plate 71 having a first upper end 70, a second bottom plate 73 having a second upper end 72, a first side plate 74, a second side plate 75, and an underflow control plate 76. As shown in FIG. 5, the first side plate 74 is formed at one end of the bucket 21 in the width direction. The second side plate 75 is formed at the other end of the bucket 21 in the width direction.

As shown in FIG. 6, when the bucket 21 is in the upward state, the second upper end 72 is higher than the first upper end 70. An angle θ1 is formed between the first bottom plate 71 and the second bottom plate 73 as viewed from side direction. The first bottom plate 71 and the second bottom plate 73 form the liquid storage portion 61 in cooperation.

As shown in FIG. 5, the underflow control plate 76 is formed over the entire width direction of the bucket 21 between the first side plate 74 and the second side plate 75. As shown in FIG. 6, when the bucket 21 is in the upward state, a lower end portion 77 of the underflow control plate 76 is at a position lower than the first upper end 70. An underflow circulating portion 78 and an underflow slit 79 are formed between the underflow control plate 76 and the first bottom plate 71.

As shown in FIG. 1 to FIG. 4, the chain bucket skimmer 10 of the present embodiment includes a fan unit 80, a first flow control member 81, and a second flow control member 82. The first flow control member 81 and the second flow control member 82 constitute a flow control unit 83. Further, the chain bucket skimmer 10 includes a first inflow portion 85 formed inside the first flow control member 81 and a second inflow portion 86 formed inside the second flow control member 82.

The fan unit 80 includes a first fan 91, a second fan 92, a rotation shaft 93, and a fan drive unit 94. The first fan 91 includes, for example, four blades 91a that rotate about the rotation shaft 93. As shown in FIG. 4, the second fan 92 is arranged on the side opposite to the first fan 91 with the chain bucket unit 22 interposed there between. The second fan 92 includes, for example, four blades 92a and rotates about the rotation shaft 93 in the same direction as the first fan 91. Each of the blade 91a of the first fan 91 and the blade 92a of the second fan 92 is arranged at a position in contact with the liquid surface Q1. The number of blades of each of the first fan 91 and the second fan is not limited to four.

The position of the liquid surface Q1 of the tank 11 changes in accordance with the operation state of the machine tool. For example, when the machine tool is stopped, the position of the liquid surface Q1 is located near the upper parts of the first fan 91 and the second fan 92. When the machine tool is in operation and the liquid Q is used, the position of the liquid surface Q1 is lowered. The height of the fan unit 80 is set such that the blade 91a of the first fan 91 and the blade 92a of the second fan 92 can be in contact with the liquid even when the height of the liquid surface Q1 changes.

The fan drive unit 94 includes a fan drive sprocket 95 provided on the rotation shaft 93. The fan drive sprocket 95 engages with the chain 20 and rotates as the chain 20 moves. The rotation of the fan drive sprocket 95 makes the rotation shaft 93 rotate and the first fan 91 and the second fan 92 rotate in the same direction.

As shown in FIG. 2, when the fan unit 80 is viewed from the side direction, the blade 91a of the first fan 91 and the blade 92a of the second fan 92 are twisted in directions opposite to each other. When each of the first fan 91 and the second fan 92 rotates in the direction indicated by an arrow R1 in FIG. 3, the liquid Q near the first fan 91 moves toward the chain bucket unit 22 in a first direction M1 (shown in FIG. 2 and FIG. 4). At the same time, the liquid Q near the second fan 92 moves in a second direction M2 (shown in FIG. 2 and FIG. 4) toward the chain bucket unit 22.

The first flow control member 81 and the second flow control member 82 constitute the flow control unit 83. The first flow control member 81 and the second flow control member 82 are each fixed to a base plate 100. The base plate 100 is provided below the casing 23. The fan unit 80 is arranged between the first flow control member 81 and the second flow control member 82, in other words, inside the flow control unit 83.

As shown in FIG. 1 to FIG. 3, the first flow control member 81 is opposed to the bucket ascending portion 22a of the chain bucket unit 22 in the horizontal direction. The second flow control member 82 is opposed to the bucket descending portion 22b in the horizontal direction. The first flow control member 81 and the second flow control member 82 are arranged at heights corresponding to the first fan 91 and the second fan 92, respectively.

As shown in FIG. 3 and FIG. 4, flanges 81a and 81b are formed at both ends in the width direction of the first flow control member 81, respectively. The flanges 81a and 81b are bent toward the second flow control member 82. Flanges 82a and 82b are formed at both ends in the width direction of the second flow control member 82, respectively. The flanges 82a and 82b are bent toward the first flow control member 81. A width W2 (shown in FIG. 4) of the flanges 82a and 82b of the second flow control member 82 is greater than a width W1 of the flanges 81a and 81b of the first flow control member 81.

The first inflow portion 85 is formed inside the first flow control member 81. The first inflow portion 85 is located between the first fan 91 and the second fan 92 on the side along which the bucket 21 ascends, in other words, on the side on which the bucket ascending portion 22a is arranged. The second inflow portion 86 is formed inside the second flow control member 82. The second inflow portion 86 is located between the first fan 91 and the second fan 92 on the side along which the bucket 21 descends, in other words, on the side on which the bucket descending portion 22b is arranged.

As shown in FIG. 4, a first opening 111 is formed between the flange 81a of the first flow control member 81 and the flange 82a of the second flow control member 82. The first opening 111 is opposed to the first fan 91. The first opening 111 is in communication with the first inflow portion 85 and the second inflow portion 86. A second opening 112 is formed between another flange 81b of the first flow control member 81 and another flange 82b of the second flow control member 82. The second opening 112 is opposed to the second fan 92. The second opening 112 is in communication with the first inflow portion 85 and the second inflow portion 86.

Next, the effect of the chain bucket skimmer 10 of the present embodiment will be described.

When the drive sprocket 26 is rotated by the drive unit 31, the chain 20 is moved. This movement makes the chain bucket unit 22 move in directions indicated by arrows A3 and A4 in FIG. 3. When the chain 20 moves, the first fan 91 and the second fan 92 rotate in the direction indicated by the arrow R1 in FIG. 3.

The twist direction of the blade 91a of the first fan 91 and the twist direction of the blade 92a of the second fan 92 are opposite to each other. Therefore, when the first fan 91 and the second fan 92 rotate about the rotation shaft 93, the first fan 91 generates a flow (indicated by the arrow M1 in FIG. 2 and FIG. 4) toward the first inflow portion 85 and the second inflow portion 86 near the liquid surface Q1. In addition, the second fan 92 generates a flow (indicated by the arrow M2) toward the first inflow portion 85 and the second inflow portion 86 near the liquid surface Q1.

When the chain bucket unit 22 moves, the bucket 21 in the upward state moves upward from the liquid surface Q1, in the first inflow portion 85 on a side along which the bucket 21 ascends. Therefore, liquid in an amount corresponding to the volume of the bucket 21 flows from the surrounding of the first inflow portion 85 into the first inflow portion 85. On the other hand, the bucket 21 in the downward state enters the liquid surface Q1 in the second inflow portion 86. Therefore, liquid in an amount corresponding to the volume of the bucket 21 in the downward state moves from the second inflow portion 86 to the surrounding of the second inflow portion 86.

For this reason, a liquid flow, which moves from the second inflow portion 86 toward the first inflow portion 85, is generated inside the flow control unit 83. Therefore, the floating matter Q2 such as oil gathers in the first inflow portion 85. In the first inflow portion 85, the bucket 21, which is in the upward state and moves upward, comes out from the liquid surface Q1. Therefore, the bucket 21 can efficiently scoop the floating matter Q2 on the liquid surface of the first inflow portion 85.

FIG. 6 shows a state in which the liquid Q and the floating matter Q2 are stored in the liquid storage portion 61 of the bucket 21 in the upward state. When the bucket 21 moves above the liquid surface Q1, the liquid above the first upper end 70 is drained through the underflow circulating portion 78. That is, most of the liquid in the liquid storage portion 61 flows out from the underflow slit 79 as indicated by an arrow M3 in FIG. **6****.**

Therefore, the liquid surface of the liquid Q stored in the liquid storage portion 61 is lowered from the position indicated by a two-dot chain line Q3 in FIG. 6 to the same position as the first upper end 70. The underflow control plate 76 prevents the floating matter Q2, such as oil floating on the liquid surface of the liquid storage portion 61, from moving. Thus, the floating matter Q2 remains in the liquid storage portion 61. Therefore, the bucket 21 moves upward in a state where liquid having a high oil concentration is stored in the liquid storage portion 61.

FIG. 7 shows a state where the bucket 21, which has passed the drive sprocket 26 at the upward end, is descending. When the bucket 21 passed the upward end and starts descending, the bucket 21 is reversed in the directions indicated by arrows R2 and R3 about the bucket attachment pin 55. Therefore, the bucket 21 is in the downward state indicated by the two-dot chain line B2 in FIG. 7.

When the bucket 21 is in the downward state and the opening 60 faces downward, the liquid in the liquid storage portion 61, the liquid containing the floating matter Q2, is drained from the bucket 21 onto the chute 35. This liquid that contains the floating matter Q2 and has fallen on the chute 35 is to flow into the oil-water separator and is to be processed.

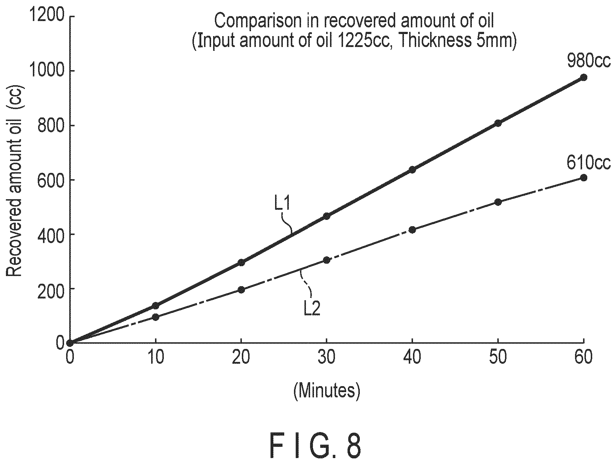

FIG. 8 is a graph showing recovered amount of oil of the chain bucket skimmer of the present embodiment and recovered amount of oil of a conventional chain bucket skimmer. The chain bucket skimmer of the present embodiment includes the fan unit 80 and the flow control unit 83. Conventional chain bucket skimmers do not have the fan unit 80 and the flow control unit 83. In each of these chain bucket skimmers, the amount of oil added to is 1225cc and the amount of oil floating on the liquid surface has thickness of about 5 mm.

A solid line L1 in FIG. 8 indicates the amount of oil recovered by the chain bucket skimmer of the present embodiment. A one-dot chain line L2 in FIG. 8 indicates amount of oil recovered by a conventional chain bucket skimmer. 980cc oil, about 80% of the entire amount of oil, can be recovered in 60 minutes after the start of the operation of the chain bucket skimmer of the present embodiment. On the other hand, 610cc oil, about 50% of the entire amount of oil, has been recovered by the conventional chain bucket skimmer. It was confirmed that the chain bucket skimmer of the present embodiment increases the amount of recovered oil by about 60% as compared to the conventional chain bucket skimmer.

### Industrial Applicability

In carrying out the present invention, the liquid may be other than a coolant. The chain bucket skimmer of the present invention is suitable for removing floating matter such as oil floating on a liquid surface and fine sludge. It is needless to say that the forms of the elements constituting the chain bucket skimmer of the present invention, for example, the elements of the chain, the bucket, the fan unit, the first flow control member, the second flow control member, the first inflow portion, the second inflow portion, and the like can be modified as needed in implementing the invention.

### Reference Signs List

Q ... Liquid, Q1 ... liquid surface, Q2 ... floating matter, 10 ... chain bucket skimmer, 11 ... tank, 20 ... chain, 21 ... bucket, 22 ... chain bucket unit, 22a ... bucket ascending portion, 22b ... bucket descending portion, 23 ... casing, 25 ... rotor, 26 ... drive sprocket, 31 ... drive unit, 35 ... chute, 40 ... tension mechanism, 55 ... bucket attachment pin, 60 ... opening, 61 ... liquid storage portion, 62 ... stopper member, 70 ... first upper end, 71 ... first bottom plate, 72 ... second upper end, 73 ... second bottom plate, 74 ... first side plate, 75 ... second side plate, 76 ... underflow control plate, 78 ... underflow circulating portion, 79 ... underflow slit, 80 ... fan unit, 81 ... first flow control member, 82 ... second flow control member, 83 ... flow control unit, 85 ... first inflow portion, 86 ... second inflow portion, 91 ... first fan, 92 ... second fan, 93 ... rotation shaft, 94 ... fan drive unit.

## Claims

1. A chain bucket skimmer for removing a floating matter (Q2) floating in a liquid (Q), comprising:
an endless chain (20) moving between a downward end (25) located below a liquid surface (Q1) of the liquid (Q) and an upward end (26) located above the liquid surface (Q1);
a bucket (21) attached to the chain (20) and including an opening (60) into which the liquid (Q) flows and a liquid storage portion (61) storing the liquid (Q), the opening (60) facing upward when the bucket (21) moves from the downward end (25) toward the upward end (26) and the opening (60) facing downward when the bucket (21) passes through the upward end (26) and moves toward the downward end (25);
a chain bucket unit (22) including the chain (20), the bucket (21), a bucket ascending portion (22a) moving from the downward end (25) to the upward end (26), and a bucket descending portion (22b) moving from the upward end (26) to the downward end (25);
a drive unit (31) moving the chain bucket unit (22);
**characterized by** comprising
a first fan (91) arranged at a position in contact with the liquid surface (Q1) and rotating about a rotation shaft (93) to move the liquid (Q) toward the chain bucket unit (22) in a first direction (M1);
a second fan (92) arranged on a side opposite to the first fan (91) with the chain bucket unit (22) interposed therebetween and rotating about the rotation shaft (93) to move the liquid (Q) toward the chain bucket unit (22) in a second direction (M2);
a first flow control member (81) facing the bucket ascending portion (22a) in a horizontal direction, extending from the liquid surface (Q1) to the liquid (Q), arranged over the first fan (91) and the second fan (92) at a height corresponding to heights of the first fan (91) and the second fan (92), and moving a part of the liquid (Q) and the floating matter (Q2) moved by rotation of the first fan (91) and the second fan (92), toward the bucket ascending portion (22a);
a second flow control member (82) facing the bucket descending portion (22b) in the horizontal direction, extending from the liquid surface (Q1) to the liquid (Q), arranged over the first fan (91) and the second fan (92) at the height corresponding to the heights of the first fan (91) and the second fan (92), and moving a part of the liquid (Q) and the floating matter (Q2) moved by rotation of the first fan (91) and the second fan (92), toward the bucket descending portion (22b);
a first inflow portion (85), which is formed between the first fan (91) and the second fan (92), in which the bucket ascending portion (22a) is arranged, and which contains the liquid (Q) and the floating matter (Q2) that have flowed into the inside of the first flow control member (81); and
a second inflow portion (86), which is formed between the first fan (91) and the second fan (92), in which the bucket descending portion (22b) is arranged, and which contains the liquid (Q) and the floating matter (Q2) that have flowed into the inside of the second flow control member (82).

2. The chain bucket skimmer of claim 1, wherein
a twist direction of a blade (91a) of the first fan (91) and a twist direction of a blade (92a) of the second fan (92) are opposite to each other, and
the first fan (91) and the second fan (92) rotate about the rotation shaft (93) in the same direction.

3. The chain bucket skimmer of claim 2, further comprising:
a fan drive sprocket (95) provided on the rotation shaft (93), wherein
the fan drive sprocket (95) engages with the chain (20) and, when the chain (20) moves, the first fan (91) and the second fan (92) rotate in the same direction.

4. The chain bucket skimmer of claim 1, comprising:
a first opening (111) formed between the first flow control member (81) and the second flow control member (82) and opposed to the first fan (91); and
a second opening (112) formed between the first flow control member (81) and the second flow control member (82) and opposed to the second fan (92).

5. The chain bucket skimmer of claim 1, wherein
the bucket (21) is formed of a resin single body,
in a state of being located at the bucket ascending portion (22a), the bucket (21) includes:
a first bottom plate (71) having a first upper end (70);
a second bottom plate (73) having a second upper end (72) higher than the first upper end (70) and forming the liquid storage portion (61) with the first bottom plate (71);
a first side plate (74) formed at an end of the bucket (21) in a width direction;
a second side plate (75) formed at another end of the bucket (21) in the width direction;
an underflow control plate (76) formed over the entire bucket (21) in the width direction between the first side plate (74) and the second side plate (75) and having a lower end at a position lower than the first upper end (70); and
an underflow circulating portion (78) formed between the underflow control plate (76) and the first bottom plate (71).

6. The chain bucket skimmer of claim 5, comprising:
a bucket attachment pin (55) for attaching the bucket (21) to the chain (20) so as to be rotatable in a vertical direction; and
a stopper member (62) for supporting the bucket (21) such that the opening (60) faces upward in a state where the bucket (21) is located at the bucket ascending portion (22a).
